**Europäisches Patentamt**

**European Patent Office**

**Office européen des brevets**

(11) Publication number: **0 073 789**
**B1**

(12) **EUROPEAN PATENT SPECIFICATION**

(45) Date of publication of patent specification: **15.10.86**

(21) Application number: **82900679.0**

(22) Date of filing: **08.03.82**

(86) International application number:
**PCT/SE82/00060**

(87) International publication number:
**WO 82/03022 16.09.82 Gazette 82/22**

(51) Int. Cl.⁴: $B\ 01\ D\ 53/04$.

(54) **APPARATUS FOR RECOVERING SOLVENT FROM EXHAUST AIR.**

(30) Priority: **09.03.81 SE 8101469**

(43) Date of publication of application:
**16.03.83 Bulletin 83/11**

(45) Publication of the grant of the patent:
**15.10.86 Bulletin 86/42**

(84) Designated Contracting States:
**BE DE FR GB NL**

(56) References cited:
**DE-A-2 815 082**
**US-A-2 760 594**

(73) Proprietor: **Bycosin AB**
**Sägverksgatan 7**
**S-652 21 Karlstad (SE)**

(72) Inventor: **HOLM, Anders**
**Trumberget 6**
**S-663 00 Skoghall (SE)**

(74) Representative: **Burman, Tore et al**
**Bergling & Sundbergh AB P.O. Box 7645**
**S-103 94 Stockholm (SE)**

Courier Press, Leamington Spa, England.

## Description

The invention relates to an apparatus for recovering solvent entrained in an air stream, said apparatus including a container provided with a bed of active carbon and having an inlet and outlet for the air stream, it being also provided with an inlet for taking water vapor through the bed in counterflow to the through-air stream for desorbing the solvent, cooling means connected to the air inlet side of the container for condensing desorbed solvent vapor and water vapor, and a closure valve for closing the air outlet of the container during the desorbing phase.

In conventional carbon filter containers (US—A—2760594) the carbon bed is carried by a strainer plate resting on the container bottom. Steam for desorbing solvent from the carbon is introduced into the distribution space under the plate. The perforations in the plate must be small so that carbon particles are not able to flow downwards and fill the distribution space. Since the whole weight of the carbon bed rests against the plate, the perforations tend to be blocked up by carbon particles, impurities and possibly also limestone which accompanies the steam and is deposited on the plate. If the perforations in the plate are blocked up, steam can exert pressure against the container. The container must therefore be made as a pressure vessel, which is an economically burdening factor, particularly with large carbon filter vessels, e.g. with a volume of some cubic meters.

The desorbed solvent together with possible steam is condensed in a cooling unit, from which the condensate is removed. The condensate contains both water and solvent, and the quantities thereof can be relatively large, later on requiring an extensive process for separating solvent from water, partly to enable using the solvent again and partly to enable discharging the water, or using it again.

The object of the invention is to propose an apparatus eliminating the need of forming the carbon bed container as a pressure vessel.

The invention is based on apparatus for regaining solvent entrained in an air stream, said apparatus including a container provided with a bed of active carbon and having an inlet and an outlet for the air stream, it being also provided with an inlet for taking steam through the bed in counterflow to the through-air stream for desorbing the solvent, cooling means connected to the air inlet side of the container for condensing desorbed solvent vapor, and a closing valve for closing the air outlet of the container during the desorbing phase. Against this background the apparatus is distinguished in that the steam inlet is connected to a perforated vessel formed to withstand pressure, said vessel being placed in the bottom zone of the container and embedded in the carbon bed. If the perforations in the vessel were to be blocked, the steam pressure would be exercised against the vessel, and thus the container will not be subjected to steam pressure.

The perforations in the vessel are preferably arranged substantially on the parts thereof facing towards the bottom of the container. In the case where the container is formed as a lying cylinder, the vessel can comprise a pipe with closed-off end, and extending parallel to the axis of the container, the pipe being preferably exchangeably mounted in the container. To advantage, the vessel can also form the outlet conduit for air purified in the apparatus. The cooling means is preferably placed inside the container in the upper zone thereof.

Steam flowing out from the perforations in the vessel will flow through or at least act on the water in the lower part of the container so that solvent residue therein is vaporized for absorption in the carbon or condensation in the cooling means.

Two apparatuses in accordance with the invention may be connected in tandem, as known in the art. This means that two apparatuses are connected in parallel, at least such that the air inlet conduits of the parallel-connected containers are in mutual, direct and open communication, fans for driving the air stream being upstream of the branch lines to the respective containers. When one apparatus has been saturated with solvent, this situation may be sensed by means of sensing means in the exhaust air conduit from the loaded container. When desorption of the loaded bed is thus required, the air outlet from the bed in question is closed and steam is led in counter to the through-air stream. The air outlet conduit from the other apparatus is opened in this situation, so that the solvent-contaminated air urged on by the fan means automatically finds its way through the other container. In the container which is then being subjected to desorbtion, the steam will press out air with its entrained solvent which has not managed to be absorbed in the bed, and this solvent-contaminated quantity of air will then quite simply be urged over to an apparatus which has just been put to use for cleaning the exhaust air flow. There is thus avoided removal of solvent-containing air via the condensate discharge conduit connected to the cooling means and possible separating means further along the line. It will be further seen that tandem connection of inventive apparatus signifies that their air intakes are not kept closed. This means that the steam taken in through one container cannot be pressurized to any damaging degree.

In the following, the invention will be described in detail in the form of a non-restricting embodiment, while referring to the attached drawing.

### Drawing

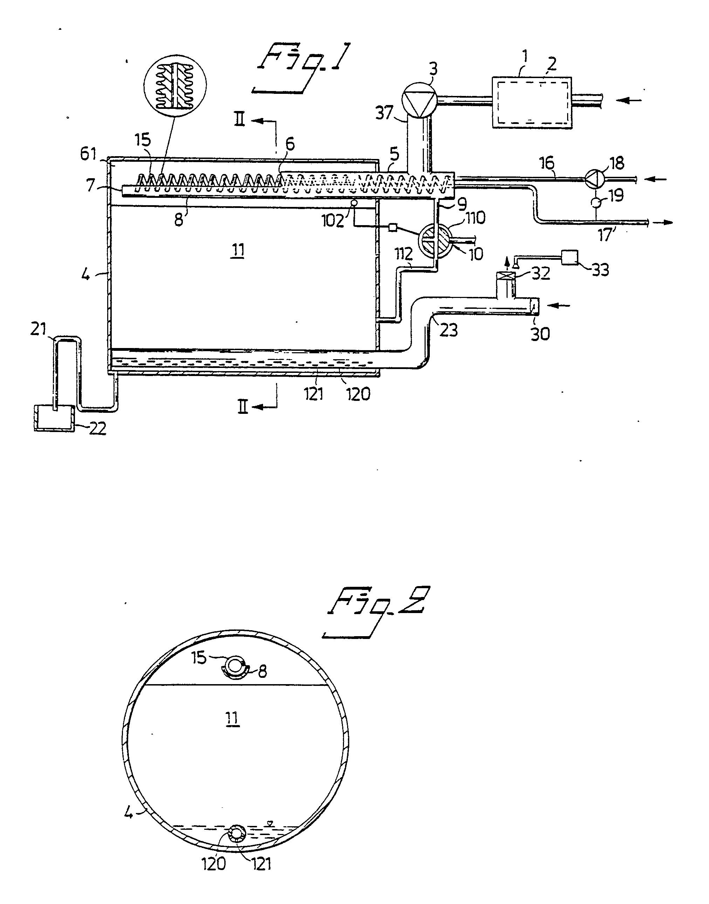

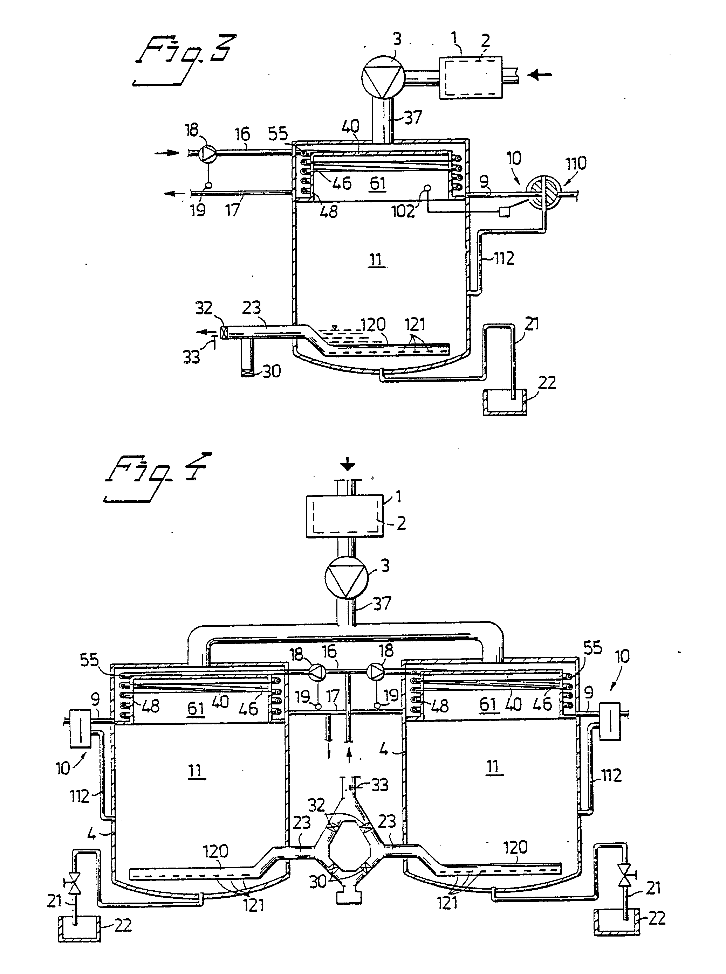

Fig. 1 is an axial, schematic section through a first embodiment of an apparatus in accordance with the invention. Fig. 2 is a section along the line II—II in Fig. 1 Fig. 3 illustrates another embodiment of an apparatus in accordance with the invention, and Fig. 4 schematically illustrates tandem connection of two apparatuses according to Fig. 3.

Fig. 1 illustrates a cylindrical container 4 with an inlet pipe 5 for solvent-contaminated exhaust air, e.g. from a trichlorethylene degreasing apparatus.

The air stream is taken in via a bag filter 2, arranged in a filter container 1, which is connected to a fan 3 communicating with an inlet pipe 5 extending into the upper zone of the container 4.

The container 4 is provided with a carbon bed 11, an upper distribution zone 61 being left between the upper surface of the carbon bed 1 and the upper limiting wall of the container 4. The inlet pipe 5 extends axially, in respect of the container, in the distribution zone 61 along the greater part of its length. The upper half of the inlet pipe 5 is cut away at the inner end portion of the pipe, and an end wall 7 is attached to the inner end of the pipe 4 so that the lower portion of the pipe 5 forms a trough 8. A helical pipe coil 15, with an outside diameter less than the inside diameter of the pipe 5, extends along substantially the whole length of the pipe 5. To advantage, the coil 15 can comprise a gilled pipe. The coil 15 is connected to an inlet conduit 16 for cooling water and to an outlet conduit 17 for removing heated cooling water. A pump 18 may be arranged in the conduit 16, and a sensing means 19 may be adapted in the outlet pipe 17 to sense the temperature of the return flow, and for controlling the pump 18 so that the temperature in the outlet conduit 17 is kept constant.

A pressure resistent vessel 120, having perforations 121 on its area facing towards the bottom of the container is embedded in the carbon bed 11 and is disposed adjacent the bottom of the container 4. The vessel 120 forms inlet and outlet for steam and air, respectively, as well as distribution space for said fluids.

An exhaust air closed valve 32 and a steam inlet valve 30 are connected to the conduit 23. Furthermore, a condensate outlet conduit 21 may be connected to the lowest point of the container 4. The conduit 21 may be made as a water trap and adapted for discharging condensate from the container under the action of fan pressure. A shut-off valve can be arranged in the conduit 21.

A sensor 33, sensing the content of solvent in the exhaust air departing through the valve 32, can be arranged to initiate a desorbing phase, such as will be described below.

The inlet pipe 5 is closed to its surroundings at its outer end, but via an outlet 9 may be connected to a separation means 10, with the aid of which solvent and water are separated. Water separated off is taken through a conduit 112 into the lower zone of the container 4. Separated solvent is collected for reuse, possibly after reconstitution.

The operation of the apparatus is as follows. Exhaust air with a relatively low content of solvent is taken to the filter 2, via the fan 3 to the inlet pipe 5 and passes round the pipe coil 15 out into the distribution zone 61, from where it passes through the carbon bed 11 to the vessel 120, and subsequently departs via the conduit 23 through the open valve 32. In this situation the pump 18 is active and urges cooling water through the coil 15 so that the air current is cooled to a predetermined low level before it flows into the zone 61. No deposition proper of the solvent on the pipe coil 15 occurs, but the cooled air stream affords cooling of the carbon bed 11, whereby the ability of the latter to adsorb solvent is substantially increased. When the sensing means 33 senses a solvent concentration exceeding a predetermined value, an automatic closure of the valve 32 may be arranged, for providing automatic activation of a steam source (not shown) and opening of the steam valve 30. Steam will thus come via the conduit 23 into the vessel 120 and further through the perforations 121 and through the bed 11. Solvent which was adsorbed in the bed 11 is thus desorbed and solvent vapor together with possible water vapor will then migrate upwards into the distribution zone 61 for cooling and condensing on the pipe coil 15. The consensate is collected in the trough 8 and taken away via the waste pipe 9 to the separating means 10.

The maintenance of an appropriate cooling effect for the cooling coil 15 is ensured with the aid of the sensing means 19.

As soon as the desorbing phase is terminated, the steam source is disconnected, valve 30 is closed and valve 32 is opened, so that solvent entrained in the exhaust air may start being absorbed in the bed.

The separation means 10 includes a valve 110 at the junction between conduit 9 and reflux conduit 112. the valve 110 is controlled by a temperature sensor 102 in the upper distribution zone 61. If the solvent (which is assumed miscible with the desorbing fluid, e.g. water) has a boiling point falling below that of water, the valve can be adapted to direct condensate through the outlet 110 of the conduit 9 when the sensed temperature is below that of the boiling point of water and exceeding the boiling point of the solvent. If the latter temperature is above 100°C a liquid can be utilized for desorption which has a boiling point exceeding that of the solvent. If the solvent is substantially immiscible to water, a conventional gravitational separator can be connected to the conduit 9, the waste pipe 112 then discharging the desorption liquid to the interior of the container 1.

Fig. 3 illustrates an embodiment of an apparatus in accordance with the invention, which corresponds to the embodiment according to Fig. 1 in all essentials. The differences are principally in relation to the embodiment of the pipe coil, condensate collection receptacle and the vessel 120.

The apparatus according to Fig. 1 is implemented in principle as a lying cylindrical container. The apparatus according to Fig. 3 is, on the other hand, implemented as a standing cylindrical container. The condensate collection receptacle in Fig. 3 is formed as a rotationally symmetric inner shell connected to the upper part of the container 4. A flange 48 is hereby connected to the cylindrical sweep of the container 4 to define a collection trough. The pipe coil is formed as a helical pipe coil 55 concentric with the axis of the container 4, said coil being placed in the space between the flange 48 and the sweep of the container 4. A cover 40 is arranged to direct incoming exhaust air flow towards the pipe coil 55, and an annular gap 46 allows the introduction of the cooled exhaust air flow into a distribution zone 61 above the carbon bed 11. The vessel 120 is formed as an annularly curved pipe.

The apparatus according to Fig. 3 otherwise corresponds to the embodiment illustrated in Fig. 1, and described in conjunction therewith.

Fig. 4 schematically illustrates two apparatuses according to Fig. 3 connected in parallel. In normal practical operaton, such a parallel or tandem connection is usually utilized.

The apparatus according to Fig. 4 requires no closure valve between the fan 3 and inlet conduits 37, and it will be noted that the steam taken in during the desorbing phase cannot be put under pressure, since the bed 11, the fan 3 and the filter 1 do not offer any substantial resistance. The containers 4 therefore do not need to be formed as pressure vessels, and in principle only need to be dimensioned to withstand the pressure exercised by the weight of the carbon bed 11.

In the normal operation of a plant according to Fig. 4, only one container is coupled for adsorption, while the other is subjected to desorption, or merely stands ready to assume the adsorption function when the need of desorption occurs in the container in operation.

When the need of desorption occurs in one container, the exhaust air valve 32 is closed and the steam inlet valve 30 is opened. The volume of air in this container will then be urged out of it before the content of solvent in this air has succeeded in being adsorbed in the bed. This volume of air will then be urged via the air inlet conduit 37 and through the air inlet conduit 37 of the second container so that this air will be cleaned in the second container, which has just been taken into operation for the purpose of adsorption. There is thus avoided that said volume of air is urged out through the condensate outlet 9 to stir the function of it, or to cause contamination of the surroundings.

At cylindrical lying containers the vessel 120 has to advantage the shape of a tube which lies in parallel with the container axis and embedded in the carbon bed at a small distance from the container bottom. Preferably the perforations 121 are arranged at the lower part of the tube 120, whereby two effects are achieved, namely partly that the tube 120 then, together with the container bottom forms a water lock such that possibly existing water/condensate on the container bottom can be treated with through-bubbling steam, partly that the steam is distributed in an advantageous way over the cross-section of the carbon bed.

In the case with a standing cylindrical container the tube 120 is suitably embedded in the carbon bed 11 at a small distance from the container bottom, the perforations preferably being arranged on the lower portion of the tube 120.

The tube is then arranged curved substantially to the shape of a ring which is coaxial with the container.

The same effects as in the previous embodiment are achieved.

As the container now has not to be made as a pressure vessel, but substantially only has to stand the forces developed by the weight of the carbon bed and the environment prevailing in the container, the container can now be made of cured plastics, internally plastics coated or painted thin sheet metal or the like, which means an extreme reduction of the costs for the device.

By pressure resistant construction of the vessel 120 is meant that the vessel shall be designed to stand the full pressure of steam which is introduced into the vessel from an external steam boiler if the perforations 120 of the vessel are clogged.

## Claims

1. Apparatus for recovering solvent entrained in an air stream, including a container (4) with an inlet (37) and an outlet (23) for the air stream, the container being provided with a bed (11) of active carbon, and with an inlet (30) for taking in steam through the bed in counterflow to the through-air flow for desorbing the solvent, cooling means (15, 55) connected to the air inlet side of the container (4) for condensing desorbed solvent vapor and a closure valve (32) for closing the air outlet of the container (4) during the desorbing phase, characterized in that the steam inlet (30) is connected to a perforated vessel (120) formed to resist pressure, which is placed in the bottom zone of the container (4) and is embedded in the carbon bed (11).

2. Apparatus as claimed in claim 1, characterized in that the perforations (121) of the vessel (120) are arranged substantially on the parts of the vessel (120) facing towards the bottom of the container (4).

3. Apparatus as claimed in claim 1 or 2, characterized in that the container (4) is formed as a lying or supine cylinder, and that the vessel (120) comprises a pipe with closed-off ends extending parallel to the axis of the container and which is preferably exchangeably mounted in the container.

4. Apparatus as claimed in any of claims 1—3, characterized in that the vessel (120) also forms the outlet conduit for air which has been cleaned in the carbon bed (11).

5. Apparatus as claimed in any of claims 1—4, chracterized in that a tapping conduit (21) preferably formed as a water trap is connected to the bottommost portion of the container (4) to allow removal of water, which has collected in the container.

## Revendications

1. Dispositif de récupération de solvant entraîné dans un flux d'air, comportant un conteneur (4) présentant une entrée (37) et une sortie (23) du flux d'air, le conteneur étant garni d'un lit (11) de charbon actif, et une entrée (30) permettant d'envoyer de la vapeur d'eau traverser le lit à contre-courant par rapport au flux d'air traversant pour désorber le solvant, des moyens de refroidissement (15, 55) reliés au côté arrivée d'air du conteneur (4) pour condenser la vapeur de solvant désorbée et une vanne de fermeture (32) assurant la fermeture de la sortie d'air du conteneur (4) pendant la phase de désorption, caractérisé en ce que l'arrivée de vapeur (30) est reliée à un récipient perforé (120) façonné de façon à résister à la pression, placé dans la zone inférieure du conteneur (4) et noyé dans le lit de charbon (11).

2. Dispositif selon la revendication 1, caractérisé en ce que les perforations (121) du récipient (120) sont disposées pratiquement sur les parties du récipient (120) tournées vers le fond du conteneur (4).

3. Dispositif selon la revendication 1 ou 2, caractérisé en ce que le conteneur (4) est réalisé sous forme d'un cylindre horizontal, et en ce que le récipient (120) comprend un tuyau à extrémités fermées s'étendant parallèlement à l'axe du conteneur et, de préférence, monté de manière interchangeable dans le conteneur.

4. Dispositif selon l'une quelconque des revendications 1 à 3, caractérisé en ce que le récipient (120) constitue aussi le conduit de sortie de l'air qui a été épuré dans le lit de charbon (11).

5. Dispositif selon l'une quelconque des revendications 1 à 4, caractérisé en ce qu'un conduit de soutirage (21) de préférence réalisé sous forme d'un siphon est relié à la partie la plus basse du conteneur (4) pour permettre l'évacuation de l'eau qui s'est accumulée dans le conteneur.

**Patentansprüche**

1. Vorrichtung zur Gewinnung von in einem Luftstrom mitgerissenen Lösungsmitteln, mit einem Behälter (4) mit einem Einlaß (37) und einem Auslaß (23) für den Luftstrom, wobei der Behälter mit einem Bett (11) von Aktivkohle versehen ist, und mit einem Einlaß (30) zur Hereinnahme von Dampf durch das Bett im Gegenstrom zu dem Luftdurchstrom für das Desorbieren des Lösungsmittels, Kühlmitteln (15, 55), die mit der Lufteinlaßeite des Behälters (4) verbunden sind zum Kondensieren desorbierten Lösungsmitteldampfes, und einem Schließventil (32) zum Verschließen des Luftauslasses des Behälters (4) während der Desorbierphase, dadurch gekennzeichnet, daß der Dampfeinlaß (30) mit einem perforierten Gefäß (120) verbunden ist, welches so ausgebildet ist, daß es dem Druck widersteht, in der Bodenzone des Behälters (4) angeordnet und in dem Kohlebett (11) eingebettet ist.

2. Vorrichtung nach Anspruch 1, dadurch gekennzeichnet, daß die Perforationen (121) des Gefäßes (120) im wesentlichen auf denjenigen Teilen des Gefäßes (120) angeordnet sind, die zum Boden des Behälters (4) hin gerichtet sind.

3. Vorrichtung nach Anspruch 1 oder 2, dadurch gekennzeichnet, daß der Behälter (4) als ein liegender oder rückwärts gestreckter Zylinder gebildet ist und daß das Gefäß (120) ein mit abgeschlossenen Enden versehenes Rohr aufweist, welches sich parallel zur Behälterachse erstreckt und vorzugsweise im Behälter austauschbar angeordnet ist.

4. Vorrichtung nach einem der Ansprüche 1 bis 3, dadurch gekennzeichnet, daß das Gefäß (120) auch die Auslaßleitung für Luft bildet, die in dem Kohlebett (11) gereinigt worden ist.

5. Vorrichtung nach einem der Ansprüche 1 bis 4, dadurch gekennzeichnet, daß eine Entnahmeleitung (21), die vorzugsweise als eine Wasserfalle ausgebildet ist, mit dem ganz unten am Boden befindlichen Teil des Behälters (4) verbunden ist, um das Entfernen von Wasser zu ermöglichen, welches in dem Behälter gesammelt worden ist.

**Fig.1**

**Fig.2**

Fig. 3

Fig. 4